Europäisches Patentamt

European Patent Office

Office européen des brevets

(11) Veröffentlichungsnummer: **0 459 130 A2**

# EUROPÄISCHE PATENTANMELDUNG

(21) Anmeldenummer: **91106143.0**

(22) Anmeldetag: **17.04.91**

(51) Int. Cl.5: **B29C 47/90, B29C 47/92**

(30) Priorität: **31.05.90 DE 4017612**

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **Gebrüder Kömmerling
Kunststoffwerke GmbH
Zweibrücker Strasse 200
W-6780 Pirmasens(DE)**

(72) Erfinder: **Batteiger, Eckhard, Dipl.-Ing. (FH)
Sengelsbergstrasse 1
W-6780 Pirmasens(DE)**
Erfinder: **Lichti, Gerhard, Dipl.-Ing.
Hauptstrasse 35
W-6781 Nünschweiler(DE)**
Erfinder: **Leukert, Udo
Ulmenweg 21
W-6780 Pirmasens(DE)**

(74) Vertreter: **Marx, Lothar, Dr. et al
Patentanwälte Schwabe, Sandmair, Marx
Stuntzstrasse 16
W-8000 München 80(DE)**

(54) **Vorrichtung zur Extrusion von Kunststoffen.**

(57) Die Erfindung betrifft eine Vorrichtung zur Extrusion von Kunststoffen, insbesondere zur Extrusion von Schaumkunststoffen, die mit einer Kalibriervorrichtung ausgestattet ist, die mindestens einen Abzug für die Kunststoffmasse und mindestens eine Kalibrierform bzw. -einheit aufweist, und mit einem Kalibriertisch sowie mit einer Vorrichtung zur Regelung der Abzugsgeschwindigkeit der Kunststoffmasse versehen ist, wobei erfindungsgemäß vor dem Abzug eine Vorrichtung zur Messung eines Schauminnendruckes angeordnet ist, die Meßwerte ausgibt, die zur Regelung der Abzugsgeschwindigkeit der Kunststoffmasse herangezogen werden.

FIG. 1

EP 0 459 130 A2

Die Erfindung betrifft eine Vorrichtung zur Extrusion von Kunststoffen, insbesondere von Schaumkunststoffen, mit mindestens einer Kalibriervorrichtung, mindestens einem Abzug für die Kunststoffmasse bzw. Schaumkunststoffmasse, mit mindestens einer Kalibrierform, mit einem Kalibriertisch und mit einer Regelung für die Abzugsgeschwindigkeit der Kunststoff- bzw. Schaumkunststoffmasse.

Derartige Vorrichtungen werden zur Extrusion von unterschiedlichsten Kunststoffprofilen verwendet. Insbesondere bei der Extrusion von Schaumplatten und Schaumprofilen wird zur Zeit als eine Regelgröße die Abzugskraft genutzt. Diese wird zwischen Abzug und Kalibriertisch mit einer Kraftmeßdose erfaßt und der Bedienungsperson angezeigt. Die Abzugskraft ist der Reibungskraft proportional, die beim Durchlaufen der Schaumplatten bzw. Schaumprofile durch die Kalibriervorrichtung zu überwinden ist.

Um gewisse Maßtoleranzen der Schaumplatten bzw. Schaumprofile vorgeben zu können, muß ein gewisser Abzugskraftbereich eingehalten werden. Wird dieser Abzugskraftbereich überschritten, so kann eine ungewollt starke Überdimensionierung des Formkörpers auftreten. Wird der Abzugskraftbereich jedoch unterschritten, so ist häufig der Formkörper unterdimensioniert und seine Dichte zu gering.

Zur Überwachung der vorgegebenen Maßtoleranzen für die Schaumplatten bzw. Schaumprofile und damit zur Einhaltung des angestrebten Abzugskraftbereiches ist eine Bedienungsperson permanent mit dem Ablesen der besagten Kraftmeßdose befaßt, um die Abzugsgeschwindigkeit des Schaumkunststoffes manuell zu regeln. Auf diese Weise soll gewährleistet werden, daß die Abzugskraft den vorgegebenen Bereich nicht über- oder unterschreitet.

Da sich der gesamte Kalibriertisch gegen den Extrusionsabzug abstützt, stellt die Abzugskraft die Summe bzw. das Integral über die auftretenden Abzugskräfte der Kalibriereinheiten dar. Dies hat zur Folge, daß die Totzeit für die Regelung zu groß ist. Wird die erste Kalibriereinheit mit einer Kraftmeßdose gelagert, so kann die Totzeit verringert werden.

Die Reibungskraft bzw. der Reibungswiderstand in der ersten Kalibrierung läßt sich mathematisch wie folgt ausdrücken:

$$F_R = p_s \cdot A \cdot \mu$$

mit

$F_R$ = Reibungskraft (N)

$p_s$ = Schauminnendruck der noch warmen Formmasse (N/m²)

$A$ = Fläche der ersten Kalibriereinheit (m²)

$\mu$ = Reibungskoeffizient zwischen Extrudatoberfläche und Kalibriereinheit

Selbstverständlich ist die Fläche A konstant, während sich die übrigen Grössen verändern können. So ist die Reibungskraft $F_R$ abhängig von dem Schauminnendruck $p_s$ und dem Reibungskoeffizienten $\mu$.

Verändert sich der Reibungskoeffizient $\mu$, was in der Praxis täglich vorkommt, so verändert sich auch die Reibungskraft $F_R$, obwohl der stationäre Zustand der Extrusion nicht gestört sein muß. Ursächlich für die Veränderung des Reibungskoeffizienten $\mu$ ist z. B. das sogenannte "Putzen". Als "Putzen" bezeichnet man Einsprühen von Reinigungslösung zwischen die Kalibrierform bzw. Kalibriereinheit und die Formmasse während der Extrusion, um Verunreinigungen zu entfernen.

Es ist die Aufgabe der vorliegenden Erfindung, eine Vorrichtung zur Extrusion von Kunststoffen, insbesondere zur Extrusion von Schaumkunststoffen, der angegebenen Gattung in der Weise weiterzubilden, daß sie die Nachteile des Standes der Technik umgeht und insbesondere die Herstellung von Schaumplatten bzw. Schaumprofilen mit wesentlich engeren Maßtoleranzen der extrudierten Formmassen ermöglicht.

Diese Aufgabe wird durch die Merkmale des Anspruchs 1, insbesondere die Merkmale im Kennzeichen des Anspruchs 1, gelöst.

Zweckmäßige Ausgestaltungsformen der erfindungsgemäßen Vorrichtung werden durch die Merkmale in den Unteransprüchen definiert.

Durch die Anordnung einer Vorrichtung zur Messung des Schauminnendruckes vor dem Abzug einer gattungsgemäßen Extrusionsvorrichtung und der Verwendung der durch diese erhaltenen Meßwerte zur Regelung der Abzugsgeschwindigkeit der warmen Formmasse, die in der Regel ein schäumfähiger Kunststoff ist, kann anstatt der Reibungskraft $F_R$ der Schauminnendruck $p_s$ der noch warmen Formmasse zur Regelung verwendet werden.

Durch die Verwendung des Schauminnendruckes als Regelgröße wird es wiederum möglich, wesentlich schneller und präziser auf Schwankungen der Prozeßgrößen bei der Extrusion zu reagieren. Dadurch werden sowohl die vorgegebenen und gewünschten Maßtoleranzen für die extrudierten Produkte gleichmäßiger eingehalten als auch die mechanische Stabilität und die Gleichmäßigkeit der Aufschäumung der Produkte vorteilhaft beeinflußt.

Es gibt verschiedene Möglichkeiten zur Erfassung des Schauminnendruckes, die alle die vorgenannten Vorteile aufweisen.

Da sich die Außenflächen einer Kalibrierform, z. B. die Platten einer Kalibrierform, unter dem Schauminnendruck durchbiegen, ist es möglich, die Durchbiegung als Wegsignal zu erfassen und zur Regelung zu nutzen. Dabei wird das Wegsignal in eine Beziehung zum Schauminnendruck gesetzt. Die Durchbiegung ließe sich beispielsweise durch einen Widerstand mit variablem Abgriff realisieren, wobei der variable Abgriff mit der mehr oder minder durchgebogenen Platte der Kalibrierform verbunden sein könnte. Vergleichbare Vorrichtungen lassen sich auch für wesentlich kompliziertere Kalibrierformen verwenden, wobei die Kalibrierformen in einzeln meßbare Abschnitte unterteilt sein kann.

Durch den Schauminnendruck wird eine Normal kraft senkrecht zur Fortbewegungsrichtung der Kunststoffmasse bzw. senkrecht zur Oberfläche der Platten der Kalibrierform erzeugt. Diese läßt sich formelmäßig wie folgt erfassen:

$$F_N = p_s \cdot A$$

mit

$F_N$ = Normalkraft senkrecht zur Kalibrieroberfläche (N)

$p_s$ = Schauminnendruck der noch warmen Formmasse (N/m²)

$A$ = Kalibrieroberfläche (m²)

Ist die Kalibrierform in der Weise realisiert, daß z. B. zwei parallele Platten durch Abstandshalter voneinander getrennt und über Zuhalteschrauben zusammengehalten sind, so wird die gesamte Normalkraft $F_N$ durch diese Zuhalteschrauben aufgefangen.

Legt man nun an mindestens eine dieser Zuhalteschrauben einen Kraftmeßring an, z. B. indem man diesen ähnlich wie Unterlegscheiben unter die Schraubenmuttern legt, so kann man indirekt über die auf die Schraube ausgeübte Normalkraft auf den Schauminnendruck schließen.

Der Schauminnendruck läßt sich auch direkt erfassen. So lassen sich z. B. quer zur Extrusionsrichtung in die Flächen der Kalibrierform Drucksensoren integrieren oder an diese Flächen anschließen, die den Schauminnendruck $p_s$ erfassen können. Die Meßsignale können auf diese Weise zur Regelung der Abzugsgeschwindigkeit direkt genutzt werden.

Eine weitere Variante, die unmittelbar für die Regelung verwendbare Meßsignale liefert, läßt sich realisieren, indem die Platten (oder sonstige geometrische Formen), der Kalibrierform elektrisch isoliert sind und auch zueinander keinen elektrischen Kontakt haben. Ordnet man zu den Flächen der Kalibrierform bzw. Kalibriereinheit parallel oder zumindest im wesentlichen parallel einen weiteren elektrisch isolierten Körper, z. B. eine dünne Platte, aus leitfähigem Material an, so bildet dieser Körper zusammen mit dem gegenüberliegenden Körper, der Bestandteil der Kalibrierform bzw -einheit ist, einen Kondensator.

Die eine Fläche des Kondensators, das wird in der Regel eine Fläche der Kalibrierform bzw. -einheit sein, wird geerdet, während die andere Fläche an eine Gleichspannung angelegt wird (oder auch umgekehrt). Zwischen den beiden gegenüberliegenden Flächen des Kondensators bildet sich ein elektrisches Feld aus, das unverändert bleibt, solange die angelegte Gleichspannung und die Geometrie des Kondensators unverändert bleiben. Verbiegt bzw. deformiert sich dagegen eine Fläche des Kondensators, das wird in der Regel die Fläche der Kalibierform sein, so verändert sich das elektrische Feld, und ein zum Schauminnendruck proportionales Meßsignal ist erhältlich. Diese Meßmethode ist außergewöhnlich empfindlich. Das analoge Meßsignal läßt sich beispielsweise an eine Steuerelektronik anschließen, die dann dieses Signal zur Regelung der Abzugsgeschwindigkeit der warmen Formmasse nutzt.

Es ist auch denkbar, zur Realisierung des Kondensators die Platten der Kalibriereinheit zu verwenden.

Alle vorgenannten Meßmethoden für den Schauminnendruck bei der Extrusion lassen sich auch für komplexere Geometrien für eine Kalibriereinheit bzw. -form einsetzen, dem die entsprechende Kalibrierform in Abschnitte unterteilt wird. Auf diese Weise lassen sich die vorgenannten Vorteile auch für komplexe Produkte aus schäumbarem Kunststoff erzielen.

Die Erfindung wird im folgenden anhand von Beispielen unter Bezugnahme auf die beiliegenden schematischen Darstellungen näher erläutert. Dabei werden weitere Vorteile und Merkmale der vorliegenden Erfindung offenbart.

Es zeigen:

Fig. 1 eine schematische perspektivische Ansicht einer bevorzugten Ausführungsform einer erfindungsgemäßen Kalibriereinheit bzw. -form;

Fig. 2 eine weitere bevorzugte Ausführungsform nach der vorliegenden Erfindung in einer perspektivischen Ansicht, und

Fig. 3 eine dritte perspektivische Darstellung einer erfindungsgemäßen, bevorzugten Ausführungsform.

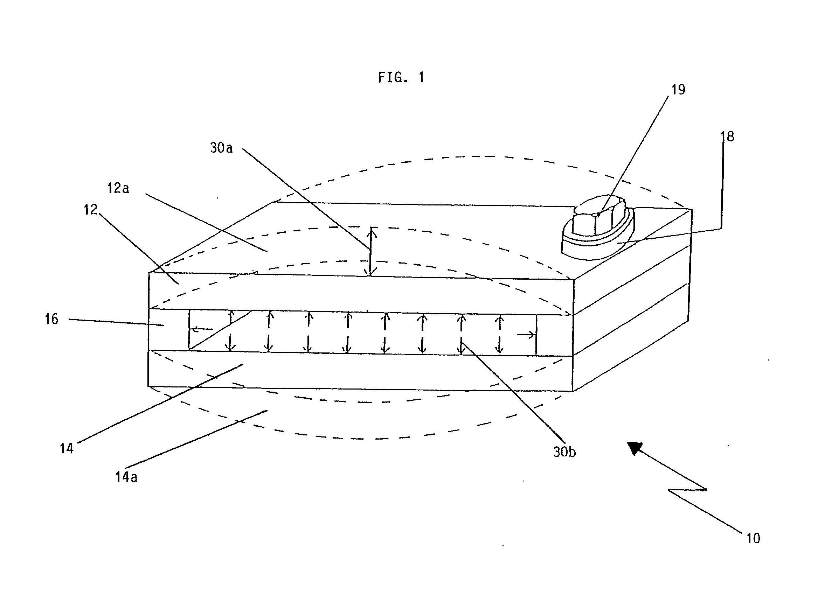

In den anliegenden Fig. 1 bis 3 sind die erfindungsgemäß realisierten Kalibrierformen bzw. -einheiten mit den Bezugsziffern 10, 10' und 10'' gekennzeichnet. In den Figuren sind gleiche Teile auch mit den gleichen Bezugsziffern bezeichnet.

Die in Fig. 1 dargestellte Ausführungsform einer erfindungsgemäß ausgestalteten Kalibrierform bzw. -einheit besteht aus zwei im wesentlichen parallel zueinander angeordneten Platten 12 und 14. Diese sind durch zwei Abstandshalter 16 in einem festen Abstand zueinander angeordnet.

Wird nun warme Formmasse zwischen den beiden Platten 12, 14 hindurchgepreßt, so übt der Schauminnendruck der noch warmen Formmasse eine Kraft auf die Platten 12, 14 aus, die diese durchbiegt bzw. deformiert. Der Schauminnendruck ist durch die Pfeile 30b symbolisch angedeutet. Der Schauminnendruck bewirkt eine Durchbiegung der Platten 12, 14 um eine Strecke 30a, die z. B. über eine Widerstandsmessung mit einem variabel einstellbaren Widerstand (hier nicht dargestellt) gemessen werden kann. Dabei ist der variable Abgriff des Widerstandes starr mit einer der Platten oder aber auch mit beiden Platten verbunden und jede Durchbiegung der Platte bzw. der Platten hat unmittelbar eine Widerstandsänderung zur Folge, wodurch der Schauminnendruck meßbar wird.

Eine weitere Ausführungsform, bei der die parallelen Platten 12, 14 der Kalibriereinheit 10 durch Zuhalteschrauben 19 zusammengehalten werden, ist gleichfalls in Fig. 1 angedeutet. Dabei ist die Zuhalteschraube 19 mit einem Kraftmeßring 18 unterlegt. Sobald der Schauminnendruck 30b steigt, wird der Kraftmeßring 18 belastet, woraus sich ein Meßsignal ergibt, das proportional zum Schauminnendruck ist. Es lassen sich natürlich auch mehrere Zuhalteschrauben und damit Kraftmeßringe an verschiedenen Stellen der Kalibrierform bzw. -einheit anbringen und zur Bestimmung des Schauminnendrucks verwenden.

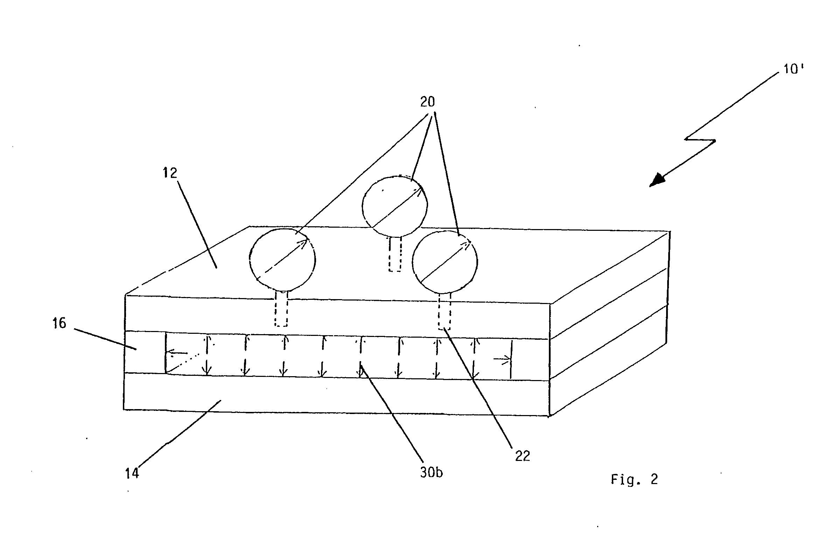

Bei der in der Fig. 2 dargestellten Ausführungsform einer Kalibriereinheit 10' sind an eine Platte 12 Druckmeßsensoren 20 angeschlossen. Diese sind zweckmäßigerweise durch Kanäle 22 hindurch unmittelbar mit der warmen Formmasse verbunden. Der Schauminnendruck läßt sich so an beliebiger Stelle messen und unmittelbar zur Regelung der Abzugsgeschwindigkeit der warmen Formmasse verwenden. Selbstverständlich lassen sich die Druckmeßsensoren 20 auch allein in die Platten 14 oder auch in beide Platten 12, 14 der Kalibriereinheit 10' einsetzen oder anschließen.

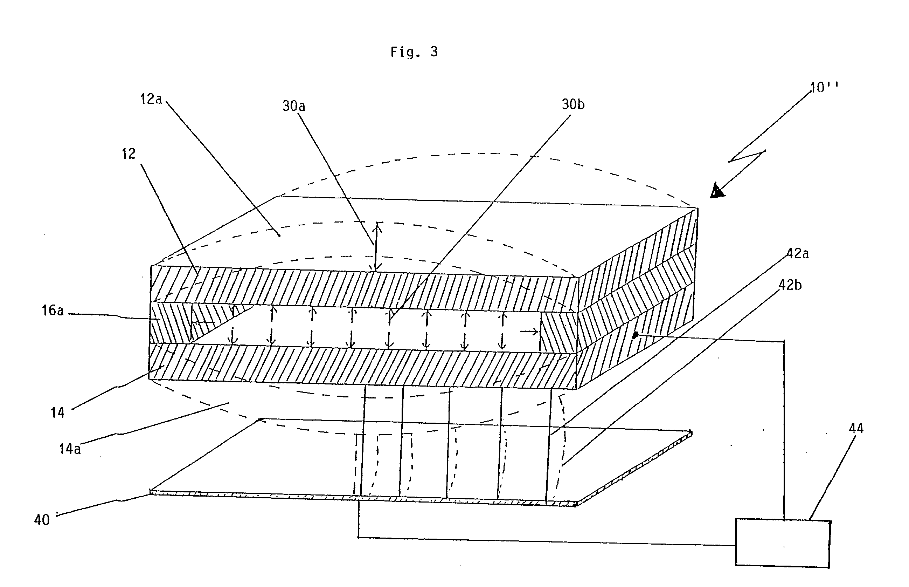

Die Ausführungsform 10'' gemäß Fig. 3 weist Platten 12, 14 aus elektrisch leitfähigem Material auf. Die Abstandshalter 16a sind entweder in ihren Randbereichen isoliert oder aber komplett aus isolierendem Material hergestellt. Die Bezugszeichen 12a, 14a deuten die Stellung der Platten 12, 14 für den Fall an, wenn der Schauminnendruck des warmen Formmaterials diese deformiert. Im durchgebogenen Zustand ist jede der Platten um eine Strecke 30a, hervorgerufen durch den Schauminnendruck 30b, durchgebogen. Eine weitere Platte 40 ist im wesentlichen parallel zur Platte 14 angeordnet und gegenüber dieser elektrisch isoliert. Die Platten 14 und 40 bilden hierbei die beiden getrennten Oberflächen eines Kondensators.

Zwischen den Platten 14 und 40 wird ein Potential angelegt. Sobald durch einen veränderlichen Schauminnendruck 30b die Platte 14 verbogen wird, verändert sich die Kapazität des Kondenstors und damit auch das Feld zwischen der Platte 14 und der Platte 40. Damit verändert sich ein Meßwert am Meßinstrument 44. Mit einer der aus dem Stand der Technik bekannten Auswerte-Schaltungen bzw. Auswerteelektroniken lassen sich die Kapazitätsänderungen oder dazu proportionale Meßgrößen über eine Steuerelektronik zur Regelung der Abzugsgeschwindigkeit der Formmasse erzielen.

Die Auswerteelektronik ist zusammen mit der Steuerelektronik symbolisch durch das gleichfalls durch das Bezugszeichen 44 gekennzeichnete Meßinstrument 44 repräsentiert. Das Bezugszeichen 42a symbolisiert die Feldlinien des elektrischen Feldes zwischen der Platte 14 und der Platte 40, wenn der Schauminnendruck der Formmasse die Platte 14 nicht verbiegt. Das Bezugszeichen 42b deutet auf die Feldlinien des elektrischen Feldes hin, wenn die Platte 14 durch einen hohen Schauminnendruck stark deformiert ist.

Die Ausführungsform gemäß Fig. 3 ist auch zur Herstellung sehr komplexer Schaumkörper geeignet.

**Patentansprüche**

1. Vorrichtung zur Extrusion von Kunststoffen, insbesondere zur Extrusion von Schaumkunststoffen,
   (a) mit einer Kalibriervorrichtung, die
      (a1) mit mindestens einem Abzug für die Kunststoffmasse, insbesondere Schaumkunststoffmasse, und
      (a2) mit mindestens einer Kalibrierform versehen ist,
   (b) mit einem Kalibriertisch, und
   (c) mit einer Vorrichtung zur Regelung der Abzugsgeschwindigkeit der Kunststoffmasse bzw. der Schaumkunststoffmasse,
   **gekennzeichnet** durch die folgenden Merkmale:
      (d) vor dem Abzug ist eine Vorrichtung (10, 10', 10'') zur Messung eines Kunststoff bzw. Schaumkunststoff-Innendrucks angeordnet;
      (e) die von der Meßvorrichtung (10, 10', 10'') erhaltenen Meßwerte dienen zur Regelung der Abzugsgeschwindigkeit der Kunststoff- bzw. Schaumkunststoffmasse.

2. Vorrichtung nach Anspruch 1,
   dadurch gekennzeichnet,
   daß die Vorrichtung zur Messung des Kunststoffschaum-Innendruckes eine Einrichtung zur Bestimmung der Deformation der Kalibrierform durch den Schauminnendruck aufweist.

3. Vorrichtung nach Anspruch 2,
dadurch gekennzeichnet,
daß die Kalibrierform aus mindestens zwei vorzugsweise gegenüberliegenden Platten (12, 14) besteht, deren Deformation (30a) bzw. Durchbiegung zur Messung des Schauminnendruckes (30b) herangezogen wird.

4. Vorrichtung nach einem der Ansprüche 1 bis 3,
dadurch gekennzeichnet,
daß die Deformation bzw. Durchbiegung (30a) in Form eines Wegsignals erfaßt und zur Bestimmung des Schauminnendruckes herangezogen wird.

5. Vorrichtung nach einem der Ansprüche 2 bis 4,
dadurch gekennzeichnet,
daß zwischen den vorzugsweise gegenüberliegenden Flächen (12, 14) der Kalibrierform eine Einrichtung (18) angeordnet ist, die die Kraft, die dem Schauminnendruck entspricht, zumindest teilweise aufnimmt und zur Bestimmung des Schauminnendruckes heranzieht.

6. Vorrichtung nach Anspruch 5,
dadurch gekennzeichnet,
daß die Einrichtung aus mindestens einer Zuhalteschraube (19) besteht, die mit einem Kraftmeßring (18) oder dergleichen ausgerüstet ist.

7. Vorrichtung nach einem der Ansprüche 1 bis 6,
dadurch gekennzeichnet,
daß mindestens ein Druckmeßsensor vorgesehen ist, der meßtechnisch mit mindestens einer Fläche der Kalibrierform in Verbindung steht, die Kontakt zur Kunststoffmasse hat.

8. Vorrichtung nach Anspruch 7,
dadurch gekennzeichnet,
daß in den Oberflächen (12, 14) der Kalibrierform mindestens ein Druckmeßsensor (20) angeordnet ist, der vorzugsweise quer zur Extrusionsrichtung eingebaut ist.

9. Vorrichtung nach einem der Ansprüche 1 bis 8,
dadurch gekennzeichnet,
daß die Kalibrierform aus einem lateralen Schlitz mit zwei in einem Abstand zueinander angeordneten parallelen Platten (12, 14) besteht, die durch Abstandshalter (16) voneinander beabstandet sind.

10. Vorrichtung nach einem der Ansprüche 1 bis 3 oder 9,
dadurch gekennzeichnet,
daß die Deformation bzw. Durchbiegung (30a) der Kalibrierform kapazitiv meßbar ist.

11. Vorrichtung nach Anspruch 10,
dadurch gekennzeichnet,
daß zumindest einzelne Abschnitte (12, 14) der Kalibrierform, beispielsweise durch Abstandshalter (16) voneinander elektrisch isoliert und mit einer Spannung beaufschlagbar sind.

12. Vorrichtung nach Anspruch 11,
dadurch gekennzeichnet,
daß sich jeweils zwei voneinander elektrisch isolierte Abschnitte (12, 14) insbesondere parallel gegenüberliegen und deren Deformation bzw. Durchbiegung (30a) in Form einer proportionalen Anzeige, insbesondere Spannungsanzeige (44), registrierbar ist.

FIG. 1

Fig. 2

Fig. 3